Europäisches Patentamt

European Patent Office

Office européen des brevets

(19)

(11) **EP 1 055 940 B1**

(12) **FASCICULE DE BREVET EUROPEEN**

(45) Date de publication et mention
de la délivrance du brevet:
**20.09.2006 Bulletin 2006/38**

(51) Int Cl.:
*G01S 13/84* *(2006.01)*

(21) Numéro de dépôt: **00490019.7**

(22) Date de dépôt: **25.05.2000**

(54) **Procédé et système de mesure de la distance entre deux objets mettant en oeuvre des séquences pseudo-aleatoires orthogonales**

Verfahren und System zur Messung der Entfernung zwischen zwei Objekten mittels aufeinanderfolgender orthogonaler Pseudozufallszahlen

Method and system of measuring the distance between two objects employing orthogonal pseudo random sequences

(84) Etats contractants désignés:
**AT BE CH CY DE DK ES FI FR GB GR IE IT LI LU MC NL PT SE**

(30) Priorité: **26.05.1999 FR 9906893**

(43) Date de publication de la demande:
**29.11.2000 Bulletin 2000/48**

(73) Titulaire: **UNIVERSITE DES SCIENCES ET TECHNOLOGIES DE LILLE**
**59655 Villeneuve-d'Ascq Cedex (FR)**

(72) Inventeurs:
• **Lienard-Finet, Martine**
**62860 Oisy-le-Verger (FR)**

• **Degauque, Pierre**
**59130 Lambersart (FR)**

(74) Mandataire: **Matkowska, Franck et al**
**Cabinet Beau de Loménie**
**27bis, rue du Vieux Faubourg**
**59800 Lille (FR)**

(56) Documents cités:
| | |
|---|---|
| WO-A-96/00910 | WO-A-98/14795 |
| DE-A- 4 419 893 | FR-A- 2 290 672 |
| FR-A- 2 644 919 | US-A- 5 550 549 |

## Description

La présente invention concerne la mesure de la distance séparant deux objets dont l'un au moins est mobile par rapport à l'autre, par calcul du temps de propagation aller et retour d'un signal hyperfréquence entre les deux objets. Elle trouve principalement son application dans le domaine de la sécurité routière ou ferroviaire, pour le contrôle en temps réel de la distance séparant deux mobiles qui se suivent ( véhicules automobiles ou rames), et par exemple entre deux mobiles dans un tunnel.

Pour contrôler la distance séparant deux objets mobiles l'un par rapport à l'autre, tels que par exemple deux véhicules ou encore la distance séparant un objet mobile par rapport à un objet fixe tel que par exemple un véhicule par rapport à une station fixe ou à un obstacle fixe, il est à ce jour connu d'équiper l'un des objets (dit par la suite objet interrogateur) avec un émetteur/récepteur, et l'autre objet (dit par la suite objet répondeur) avec un émetteur/récepteur à fonction de transpondeur. D'une manière générale, pour le calcul de distance, l'objet interrogateur émet à destination de l'objet répondeur un signal hyperfréquence, qui est reçu et réémis par l'objet répondeur à destination de l'objet interrogateur. La mesure du temps aller et retour de ce signal permet de calculer automatiquement une estimation de la distance séparant les deux objets. La mesure de ce temps de propagation aller-retour du signal est par exemple réalisée en équipant l'objet interrogateur d'une horloge dédiée à la mesure du temps de propagation, et en faisant déclencher puis arrêter automatiquement cette horloge par l'objet interrogateur respectivement en début d'émission par l'objet interrogateur du signal d'interrogation, et à la réception par l'objet interrogateur du signal de réponse qui lui est retourné par l'objet répondeur.

Cette solution générale est celle retenue par exemple dans les publications FR-A-2644919 et FR-A-2290672. Plus particulièrement, dans la publication FR-A- 2644919, il est préconisé dans une variante de réalisation, de réaliser une modulation par inversion de phase de l'onde porteuse du signal d'interrogation émis par l'objet interrogateur, selon une séquence binaire pseudo-aléatoire (encore communément appelée code). Dans cette variante, la séquence pseudo-aléatoire utilisée est spécifique de l'objet répondeur par rapport auquel l'objet interrogateur souhaite contrôler sa distance, et de ce fait a pour fonction de discriminer cet objet répondeur par rapport à d'autres objets répondeurs prévus pour fonctionner avec une autre séquence pseudo-aléatoire ; lors de la réémission du signal par l'objet répondeur, la porteuse est modulée selon cette même séquence pseudo-aléatoire, et l'objet interrogateur à la réception du signal de réponse effectue une opération usuelle de corrélation avec cette séquence pseudo-aléatoire pour obtenir la mesure de distance.

Une difficulté importante inhérente à la solution du contrôle de distance entre deux objets par mesure du temps de propagation aller-retour d'un signal entre ces deux objets est liée aux risques de réflexion parasites du signal émis par l'objet interrogateur par exemple sur un obstacle intermédiaire; il s'agit par exemple d'un mobile arrivant en sens inverse sur une voie parallèle à celle des deux mobiles interrogateur et répondeur ou encore de tout obstacle fixe qui est positionné en bordure du trajet des mobiles interrogateur et répondeur. On comprend qu'en cas de réflexion du signal d'interrogation émis par l'objet interrogateur, l'objet interrogateur reçoit prématurément un signal de réponse, ce qui fausserait complètement le calcul de distance, si aucune mesure de discrimination des signaux n'était mise en oeuvre. Actuellement, pour discriminer le signal de réponse du signal d'interrogation, la solution la plus répandue, et mise en oeuvre notamment dans les deux publications précitées FR-A-2644919 et FR-A-2290672 consiste à faire réaliser par l'objet répondeur une transposition de fréquence de l'onde porteuse lors de la réémission du signal de réponse. Cette transposition de fréquence permet à l'objet interrogateur de discriminer à la réception un signal effectivement renvoyé par l'objet répondeur de tout signal parasite dont la fréquence de la porteuse n'a pas été modifiée.

En mettant en oeuvre la solution de la transposition de fréquence de la porteuse, pour conserver une précision donnée sur la mesure de distance, on est en pratique contraint d'au moins doubler la bande passante utilisée par rapport à une transmission aller-retour d'un signal sans changement de fréquence de la porteuse, ce qui est pénalisant d'un point de vue de l'occupation spectrale.

On connaît par ailleurs, du document US-A-5 550 549, un procédé de mesure de la distance entre un émetteur et un transpondeur, par mesure du temps de propagation aller-retour d'un signal hyperfréquence, basé sur la technique du « chirp » radar. L'objet interrogateur (l'émetteur) émet un signal de mesure se décomposant en un signal de déclenchement et un premier signal « chirp ». Ce premier signal « chirp » reçu par l'objet répondeur (le transpondeur) est comparé avec un premier « chirp » de référence, puis l'objet répondeur génère un second signal « chirp » corrigé et l'envoi à l'objet interrogateur. Ce second signal « chirp » corrigé reçu par l'objet interrogateur est comparé avec un second « chirp » de référence.

La notion de signal « chirp », est par ailleurs bien connue dans le domaine des techniques radars. Un tel signal « chirp » est une impulsion, ou un train d'impulsions, modulé en fréquence par un signal de type sinusoïdal, dont la fréquence augmente de manière linéaire entre deux fréquences basse et haute prédéfinies.

Lors de la réception, la superposition d'un signal « chirp » reçu et d'un signal « chirp » initialement émis génère un écart de fréquence proportionnel au décalage temporel entre ces deux signaux, et par la même, à la distance entre les deux objets.

Le procédé décrit dans US-A-5 550 549 utilise donc cette propriété particulière des signaux « chirp ». Après corrélation au niveau du transpondeur, le signal de déclenchement sert donc uniquement à déterminer un temps approximatif de réception.

Un tel procédé est cependant compliqué à mettre en oeuvre, notamment parce qu'il nécessite le calcul de facteurs correctifs pour s'affranchir d'une partie des imprécisions liées au caractère approximatif du temps de réception déterminé, et également parce que ce procédé permet difficilement d'obtenir une grande portée de détection avec une précision assez bonne.

Enfin, on connaît, du document WO 96/00910, un procédé de détection de véhicules mobiles par un système radar. Cette détection est basée sur la mise en oeuvre de signaux hyperfréquences codés par des séquences pseudo-aléatoires. Le signal écho qui est retourné après réflexion sur l'objet est nécessairement un signal hypertréguence codé avec même séquence pseudo-aléatoire que le signal émis initialement. Dans ce procédé, un objet, en tant qu'objet répondeur, est un objet répondeur passif qui n'est pas prévu pour passer en mode émission suite à réception d'un signal d'interrogation. Les séquences d'interrogation, utilisées pour produire l'onde porteuse de modulation des signaux d'interrogation émis par les objets interrogateurs actifs, sont orthogonales. entre elles, de sorte qu'un signal d'interrogation émis par un premier objet interrogateur n'interfère pas dans le processus de détection d'un deuxième objet interrogateur qui vient d'émettre un autre signal d'interrogation à destination d'un objet répondeur passif quelconque. En effet, les signaux d'interrogation respectifs de tous les objets interrogateurs étant modulés par des ondes porteuses produites respectivement par des séquences pseudo-aléatoires orthogonales, tout objet interrogateur peut discriminer automatiquement, parmi les signaux reçus, entre d'une part les signaux échos radar renvoyés par réflexion sur un objet répondeur passif quelconque, et d'autre part les signaux interrogateurs parasites émis par les autres objets interrogateurs

Mais ce procédé ne concerne que des objets répondeurs passifs, et ne permet donc pas à l'objet interrogateur de discriminer automatiquement, parmi les signaux reçus, entre d'une part les signaux de réponse effectivement renvoyés par un objet répondeur actif quelconque, et d'autre part les signaux parasites issus des réflexions sur des obstacles du signal d'interrogation (SI) initial émis par cet objet interrogateur 1.

L'invention vise à perfectionner la mesure de distance séparant deux objets interrogateur et répondeur en apportant une solution nouvelle au problème des ondes parasites réfléchies tout en évitant le problème d'occupation spectrale importante qui est inhérent à l'une des solutions précitées de transposition de fréquence de la porteuse.

La solution de l'invention est basé essentiellement sur l'émission respectivement d'un signal d'interrogation par l'objet interrogateur et d'un signal de réponse par l'objet répondeur qui sont obtenus par modulation d'une porteuse au moyen respectivement de séquences pseudo-aléatoires (PN1) et (PN2) qui sont orthogonales. La notion de séquences pseudo-aléatoires orthogonales est en soit connue et peut être résumée de la manière suivante : deux séquences pseudo-aléatoires (PN1) et (PN2) sont orthogonales lorsque le résultat du calcul de leur fonction d'intercorrélation (corrélation de PN1 avec PN2) peut être assimilé à du bruit d'amplitude maximale faible comparativement notamment à l'amplitude maximale du pic de corrélation qui est obtenu lors du calcul de la fonction d'autocorrélation de l'une ou l'autre des deux séquences pseudo-aléatoires (corrélation de PN1 avec PN1 ou de PN2 avec PN2). La notion de fonction de corrélation de deux séquences pseudo-aléatoires entre elles est en soit déjà connue et ne sera par conséquent pas détaillée dans la présente description. A titre indicatif, pour une compréhension plus complète des notions de séquences pseudo-aléatoires et de leur mise en oeuvre actuelle dans le domaine de la radiocommunication, on pourra se référer à la publication :

« Principles of communications », par ZIEMER et TRANTER,
Wiley Press, 1995

Pour une compréhension plus complète des notions de corrélations de deux séquences pseudo-aléatoires entre elles et de séquences pseudo-aléatoires orthogonales, on pourra se référer à la publication:

« Communication Systems » 3ème Edition, 1994, par S. HAYKIN, J. Wiley Ed.

L'invention a ainsi pour premier objet un procédé de mesure de la distance séparant un objet interrogateur et un objet répondeur, lequel procédé est connu en ce qu'on fait émettre par l'objet interrogateur un signal d'interrogation à destination de l'objet répondeur et on fait émettre par l'objet répondeur, après réception de ce signal d'interrogation, un signal de réponse à destination de l'objet interrogateur, et on calcule la distance entre l'objet interrogateur et l'objet répondeur à partir d'une mesure du temps de propagation des signaux d'interrogation et de réponse entre les deux objets.

De manière caractéristique selon l'invention, le signal d'interrogation (SI) est obtenu en modulant une onde porteuse avec un premier signal de modulation produit au moyen d'une ou plusieurs séquences pseudo-aléatoires d'interrogation (PN1); le signal de réponse (SR) est obtenu en modulant une onde porteuse avec un deuxième signal de modulation produit au moyen d'une ou plusieurs séquences pseudo-aléatoires de réponse (PN2) qui sont orthogonales aux séquences pseudo-aléatoires d'interrogation (PN1), et pour la mesure de distance, on effectue une corrélation du signal reçu par l'objet interrogateur avec le code caractéristique d'une séquence pseudo-aléatoire de réponse (PN2).

Dans la cadre de l'invention, la porteuse du signal d'interrogation et celle du signal de réponse peuvent avoir la même fréquence. Ceci n'est toutefois pas limitatif de l'invention. Il est en effet envisageable dans le cadre de l'invention d'utiliser deux porteuses ayant des fréquences différentes, ce qui augmente la fiabilité de la transmission comparativement à la mise en oeuvre de porteuses identiques.

Plus particulièrement, dans une première variante de mise en oeuvre du procédé de l'invention, te premier signal de modulation (objet interrogateur) est généré en encodant une première trame de données binaires selon la technique d'étalement de spectre à séquence directe (DS-SS), et au moyen de séquences pseudo-aléatoires d'interrogation (PN1); le deuxième signal de modulation (objet répondeur M2/R) est généré en encodant une seconde trame de donnée binaires, selon la technique d'étalement de spectre à séquence directe (DS-SS) et au moyen de séquences pseudo-aléatoires de réponse (PN2) ; la mesure du temps de propagation des signaux entre les deux objets, pour le calcul de la distance, est réalisée en détectant un pic de corrélation dans le signal de corrélation issu de la corrélation du signal reçu par l'objet interrogateur avec le code caractéristique la séquence pseudo-aléatoire de réponse (PN2).

Dans le cadre de cette première variante, les données numériques (première et seconde séquences de données binaires) encodées avec les séquences pseudo-aléatoires peuvent avantageusement être utilisées pour transmettre entre les objets un message utilisable par l'objet récepteur de ce message, par exemple code d'identification, vitesse, localisation,... de l'objet émetteur du message.

Dans une deuxième variante de mise en oeuvre du procédé de l'invention :

- au niveau de l'objet interrogateur, on génère une série de (m) séquences pseudo-aléatoires d'interrogation (PN1) [m étant un entier supérieur ou égal à 1] pour coder le signal d'interrogation (SI), et
- au niveau de l'objet répondeur, on génère une série de (m) séquences pseudo-aléatoires de réponse (PN2) pour coder le signal de réponse (SR).

Plus particulièrement, au niveau de l'objet interrogateur, parallèlement à l'envoi du signal d'interrogation (SI), on génère, en synchronisme avec la série de (m) séquences pseudo-aléatoires d'interrogation (PN1), une série de (m) séquences pseudo-aléatoires (/PN2) inversées par rapport aux séquences pseudo-aléatoires de réponse (PN2) ; la mesure du temps de propagation des signaux entre les deux objets, pour le calcul de la distance, est réalisée :

- en générant, à partir du signal de réponse (SR) reçu par l'objet interrogateur et de la série de (m) séquences pseudo-aléatoires de réponse inversées (/PN2), un signal de corrélation comportant des pics de corrélation négatifs et positifs, chaque pic négatif étant issu de la corrélation d'une séquence pseudo-aléatoire de réponse inversée avec le code caractéristique de la séquence pseudo-aléatoire d'interrogation (PN2), et chaque pic positif étant issu de la corrélation d'une séquence pseudo-aléatoire du signal de réponse (SR) reçu par l'objet interrogateur avec le code caractéristique de la séquence pseudo-aléatoire d'interrogation (PN2),

- et en mesurant chaque intervalle de temps ($\delta t_i$) séparant un pic négatif et le premier pic positif qui le suit dans le temps.

Tel que cela apparaîtra plus clairement ci-après, les principaux avantages de cette deuxième variante de réalisation sont :

- l'obtention de pics de corrélation négatifs pour caractériser les signaux d'interrogation émis par l'objet interrogateur et de pics de corrélation positifs pour caractériser les signaux de réponse reçus par l'objet interrogateur; comparativement à une solution dans laquelle tous les pics de corrélation auraient le même signe, cette particularité d'une part facilite d'une manière générale la différentiation de ces pics en vue du calcul de distance et d'une manière plus particulière permet de mettre en oeuvre deux seuils de détection qui peuvent avantageusement être différents, et d'autre part permet de choisir la longueur des séquences pseudo-aléatoires indépendamment du temps de propagation des signaux ;
- l'obtention d'une meilleure précision sur la mesure de distance, en effectuant par exemple une moyenne sur chaque intervalle de temps mesuré entre un premier pic positif et un premier pic négatif , la précision de la mesure de distance augmentant avec le nombre (m) de séquences pseudo-aléatoires dans la série.

L'invention a pour autre objet un système de mesure de la distance entre un objet interrogateur et un objet répondeur permettant la mise en oeuvre du procédé précité. De manière usuelle, chaque objet est équipé d'une part d'un module émetteur comportant des moyens de modulation d'une porteuse et permettant l'émission d'un signal à destination de l'autre objet, et d'autre part d'un module récepteur apte à recevoir un signal émis par le module émetteur de l'autre objet.

De manière caractéristique selon l'invention:

- le module émetteur de l'objet interrogateur comporte un générateur de séquences pseudo-aléatoires d'interrogation (PN1) et les moyens de modulation de ce module émetteur sont conçus pour moduler une onde porteuse à partir des séquences pseudo-aléatoires d'interrogation (PN1) délivrées par ce générateur ,
- le module émetteur de l'objet répondeur comporte un générateur de séquences pseudo-aléatoires de réponse (PN2) qui sont orthogonales au séquences pseudo-aléatoires d'interrogation (PN1) et les moyens de modulation de ce module émetteur sont conçus pour moduler une onde porteuse à partir des séquences pseudo-aléatoires de réponse (PN2) délivrées par ce générateur,

- le module récepteur de l'objet répondeur comporte un registre dans lequel est mémorisé le code caractéristique d'une séquence pseudo-aléatoire d'interrogation (PN1) et des moyens de corrélation du signal reçu par l'objet répondeur avec le code (PN1) stocké dans ce registre,

- le module récepteur de l'objet interrogateur comporte un registre dans lequel est mémorisé le code caractéristique d'une séquence pseudo-aléatoire de réponse (PN2), et des moyens de corrélation du signal reçu par l'objet interrogateur avec le code (PN2) stocké dans ce registre,

- l'objet interrogateur comporte des moyens de calcul de la distance séparant les deux objets interrogateurs et répondeur à partir d'une détection de pics de corrélation dans le signal de corrélation issu des moyens de corrélation.

Les caractéristiques et avantages de l'invention apparaîtront plus clairement à la lecture de la description ci-après de deux variantes préférées de réalisation, laquelle description est donnée à titre d'exemple non limitatif et en référence au dessin annexé sur lequel :

- la figure 1 représente schématiquement deux mobiles se suivant dans un tunnel, chaque mobile étant équipé à l'avant d'un dispositif interrogateur et à l'arrière d'un dispositif répondeur,

- les figures 2 et 3 sont des synoptiques respectivement d'un dispositif interrogateur et d'un dispositif répondeur réalisés conformément à une première variante de réalisation,

- la figure 4 représente les chronogrammes des principaux signaux des dispositifs des figures 2 et 3,

- les figures 5 et 6 sont des synoptiques respectivement d'un dispositif interrogateur et d'un dispositif répondeur réalisés conformément à une seconde variante de réalisation,

- et la figure 7 représente les chronogrammes des principaux signaux des dispositifs des figures 5 et 6.

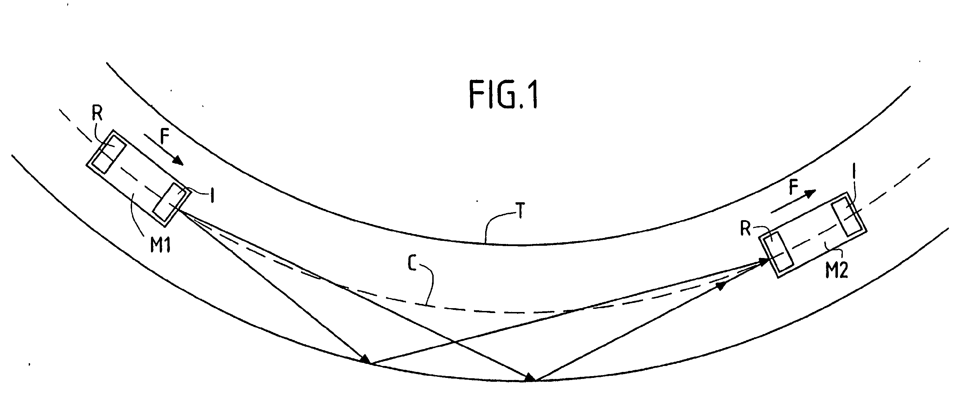

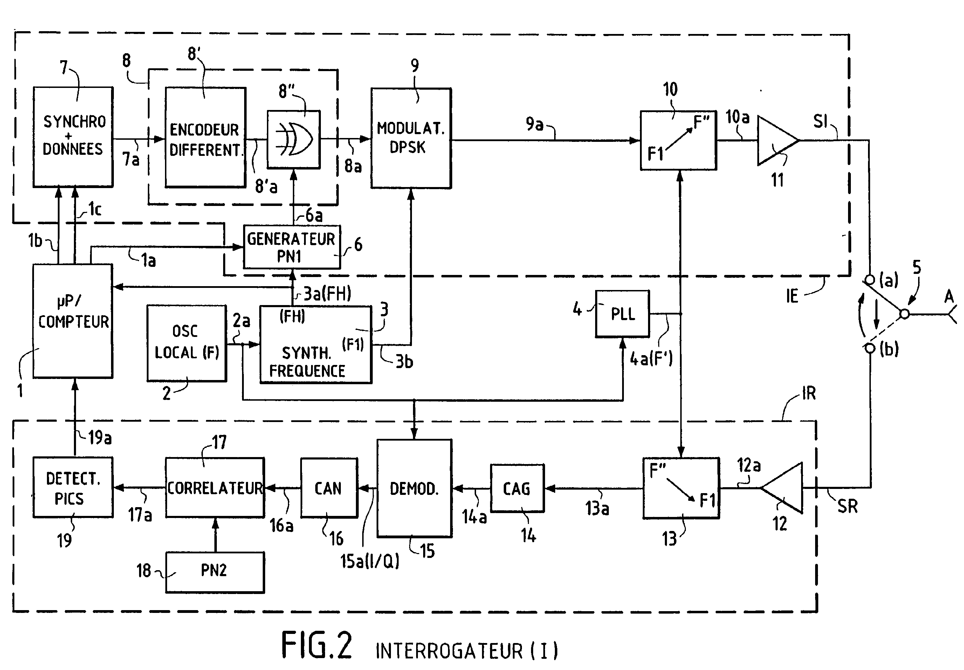

Sur la figure 1 sont représentés schématiquement deux mobiles (M1) et (M2) qui se déplacent l'un derrière l'autre à l'intérieur d'un tunnel (T), dans la direction de transport illustrée par les flèches (F) ; il s'agit par exemple de deux rames se suivant dans un tunnel ferroviaire. Chaque mobile (M1), (M2) est équipé à l'avant d'un dispositif interrogateur (I) et à l'arrière d'un dispositif répondeur (R). Dans l'exemple de la figure 1, le dispositif interrogateur (I) du mobile M1 permet d'une manière générale l'envoi d'un signal hyperfréquence d'interrogation à destination du dispositif répondeur (R) du mobile (M2) - c'est-à-dire du mobile qui le précède -, lequel dispositif répondeur (R) a pour fonction d'émettre à destination du dispositif interrogateur (I) du mobile (M1) un signal hyperfréquence de réponse, le dispositif interrogateur (I) ayant en outre pour fonction de mesurer le temps de propagation des signaux d'interrogation et de réponse entre les mobiles (M1) et (M2) et d'en déduire automatiquement une estimation de la distance séparant les deux mobiles. La structure et le fonctionnement de deux variantes de réalisation des dispositifs interrogateur (I) et répondeur (R) seront décrits plus en détails ultérieurement en référence aux figures 2 à 7.

Dans l'application particulière de la figure 1, les signaux d'interrogation et de réponse sont émis et reçus au moyen d'antennes directives, les parois du tunnel (T) faisant office de guides d'ondes. Dans le cas d'une portion courbe telle que celle de la figure 1, le signal reçu par un mobile est la somme des ondes réfléchies sur les parois du tunnel. La distance qui est calculée par le dispositif interrogateur du mobile (M1) correspondra à une estimation de la distance curviligne selon la courbe (C) schématisant le trajet réel des mobiles (M1) et (M2).

Dans le cas d'une propagation d'ondes guidées, il est envisageable de remplacer le tunnel (T) par tout guide d'onde remplissant la même fonction ; en particulier, il est envisageable d'utiliser comme guide d'onde un câble rayonnant positionné le long du trajet des mobiles. En outre, l'invention n'est pas limitée à une propagation d'ondes guidées, mais elle peut également être mise en oeuvre avec des signaux d'interrogation et de réponse se propageant librement.

PREMIERE VARIANTE DE REALISATION (Figures 2, 3 et 4)

En référence à la figure 2, dans une première variante de réalisation un dispositif interrogateur (I) comprend principalement :

- un module émetteur (IE) permettant l'émission d'un signal d'interrogation (SI), via une antenne directive (A) dirigée vers l'avant du mobile,

- un module récepteur (IR) pour le traitement en réception du signal de réponse (SR), reçu via cette même antenne directive (A),

- une unité de traitement 1, qui est réalisée par exemple au moyen d'un microprocesseur, et qui a principalement pour fonction de mesurer, au moyen d'un compteur, le temps de propagation aller d'un signal d'interrogation (SI) et retour du signal de réponse (SR) correspondant, et de calculer automatiquement la distance séparant les deux mobiles en fonction de ce temps de propagation,

- un oscillateur local principal 2 délivrant un signal horloge principal 2a de fréquence F fixe prédéterminée (par exemple 20MHz)

- un synthétiseur de fréquences 3, recevant en entrée le signal horloge principal 2a, et délivrant en sortie deux signaux horloge secondaires 3a, 3b, qui sont synchrones avec le signal horloge principal 2a, et dont les fréquences sont des multiples ou sous-multiples de la fréquence principale (F); les fréquences FH et F1 respectivement des signaux horloge secondaires 3a et 3b valent par exemple respectivement la moitié, et le double de la fréquence (F) du signal horloge principal 2a ( c'est-à-dire 10Mhz et 40Mhz pour un signal 2a de fréquence F valant 20MHz),

- un oscillateur local secondaire 4 à verrouillage de phase, qui délivre un signal hyperfréquence 4a (par exemple de fréquence F' valant 2,41 GHz) et qui est conçu pour être verrouillé en phase avec le signal horloge principal 2a ,

- et un commutateur 5 permettant de basculer le dispositif interrogateur en mode émission (position (a) illustrée sur la figure 1) ou en mode réception (position (b)), ce commutateur étant par exemple commandé par l'unité de traitement 1.

Le module émetteur (IE) du dispositif interrogateur comprend essentiellement :

- un générateur 6 de séquences pseudo-aléatoires, qui est cadencé par le signal horloge secondaire 3a de fréquence FH (10MHz), qui est commandé par l'unité de traitement 1 via un signal d'autorisation 1a, et qui, lorsque le signal d'autorisation 1a est actif, délivre en sortie (signal 6a) à la fréquence (FH) des séquences de (n) bits ( par exemple 64 bits) correspondant à un premier code pseudo-aléatoire (PN1), dit par la suite séquence pseudo-aléatoire d'interrogation,

- un générateur 7 de message (trame de synchronisation et trame de données binaires) commandé et cadencé par l'unité de traitement 1 via un signal de données 1c et un signal horloge 1b , qui est synchrone avec le signal horloge secondaire 3a et dont la fréquence est égale à la fréquence (FH) divisée par la longueur (n) d'une séquence pseudo-aléatoire d'interrogation (PN1),

- des moyens 8 ayant pour principale fonction d'encoder chaque bit d'un message (trame de synchronisation et trame de données) délivré par le générateur 7, selon la technique d'étalement de spectre à séquence directe (DS-SS), au moyen de la séquence pseudo-aléatoire d'interrogation (PN1), lesquels moyens d'encodage 8 délivrent en sortie un signal de modulation numérique 8a ( de fréquence FH),

- des moyens 9 réalisant, à partir du signal de modulation 8a, une modulation d'une porteuse pure fournie par le signal horloge secondaire 3b de fréquence intermédiaire F1 (40MHz),

- des moyens 10 (communément appelés « up converter ») permettant de transposer le signal modulé 9a de fréquence intermédiaire (F1) en un signal hyperfréquence 10a de fréquence F" (F' + F1) à partir du signal horloge 4a verrouillé en phase,

- des moyens 11 d'amplification du signal hyperfréquence 10a délivrant en sortie le signal d'interrogation (SI) à destination de l'antenne (A).

Le générateur 6 de séquences pseudo-aléatoires d'interrogation (PN1) est par exemple réalisé de manière usuelle et connue sous la forme d'un registre à décalage rebouclé sur lui même. La configuration d'un tel générateur à registre à décalage est fixée au cas par cas, et de manière connue en soi, en fonction de la séquence binaire pseudo-aléatoire devant être générée, et est de manière usuelle définie par un polynôme.

Dans l'exemple particulier de la figure 2, les moyens d'encodage 8 comportent un premier circuit encodeur 8' réalisant de manière connue un encodage différentiel des informations binaires (signal 7a) délivrées par le générateur 7, suivi d'un second circuit encodeur 8'' réalisant une sommation logique (OU exclusif) de chaque bit du signal 8'a encodé en mode différentiel, avec une séquence pseudo-aléatoire d'interrogation (PN1) délivrée par le générateur 6. Les moyens de modulation 9 sont conçus pour réaliser de manière usuelle une modulation en phase de la porteuse ( signal horloge 3b) à partir du signal de modulation 8a étalé, et par exemple une modulation DPSK.

En réception, le module récepteur (IR) du dispositif interrogateur (I) comporte essentiellement:

- des moyens d'amplification 12 du signal de réponse (SR) reçu via l'antenne (A), lorsque le commutateur 5 est en position (b),

- des moyens 13 ( communément appelé « down converter ») permettant de transposer en fréquence le signal de réponse amplifié 12a (porteuse de fréquence F" par exemple 2,45GHz) en un signal 13a de fréquence intermédiaire F1 ( par exemple 40MHz), à partir du signal d'horloge 4a,

- un module 14 de contrôle automatique de gain (CAG) réalisé de manière usuelle sous la forme d'un amplificateur à gain variable et ajustable automatiquement en sorte d'obtenir un niveau de sortie constant (signal 14a),

- des moyens de démodulation 15 du signal 14a, qui génèrent en sortie un signal 15a se décomposant de manière usuelle suivant les composantes en phase (I) et en quadrature (Q), et ce à une fréquence intermédiaire (F),

- un convertisseur analogique/numérique 16 assurant la conversion binaire du signal analogique démodulé 15a,

- un filtre de corrélation 17 (connu en soi) qui effectue de manière usuelle une corrélation entre le signal numérique 16a délivré par le convertisseur 16 et un code binaire stocké en mémoire dans un registre 18 et correspondant à une séquence pseudo-aléatoire de réponse (PN2), lequel filtre de corrélation 17 délivre en sortie un signal de corrélation 17a,

- des moyens 19 qui ont pour fonction de détecter les pics de corrélation dans le signal de corrélation 17a, par comparaison du signal de corrélation 17a avec un seuil prédéterminé, et qui, sur détection du pic de corrélation correspondant au premier bit de la trame de données d'un message, génèrent pour le microprocesseur de l'unité de traitement 1 un signal de détection 19a , par exemple sous la forme d'un créneau ou d'une impulsion.

Selon une caractéristique essentielle de l'invention, la séquence pseudo-aléatoire de réponse (PN2), stockée en mémoire sous la forme d'un code binaire dans le registre 18, est orthogonale à la séquence pseudo-aléatoire d'interrogation (PN1).

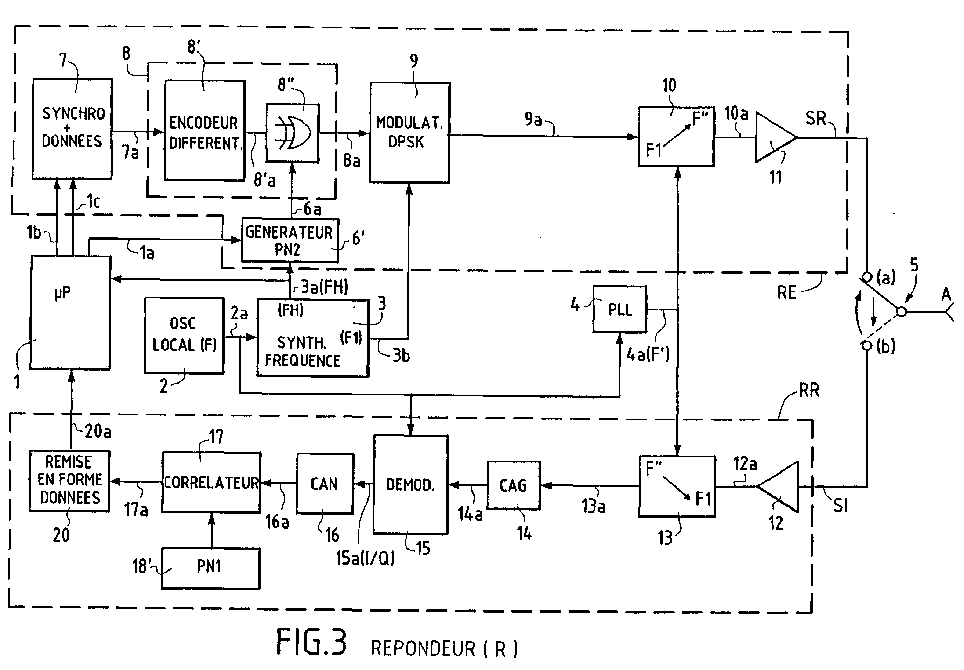

En référence au synoptique de la figure 3, l'architecture électronique du dispositif répondeur (R) est similaire à celle du dispositif interrogateur (I) de la figure 2. Par soucis de clarté et de simplification, on a conservé sur la figure 3 les mêmes références pour désigner les éléments du dispositif répondeur (R) qui sont identiques à ceux du dispositif interrogateur (I) de la figure 2. Dans la suite de la description, seuls les éléments du dispositif répondeur (R) qui diffèrent de ceux mis en oeuvre dans le dispositif interrogateur (I) précédemment décrit vont être expliqués.

Si l'on se réfère à la figure 3, le module émetteur (RE) du dispositif répondeur (R) se différencie du module émetteur (IE) du dispositif interrogateur (I) de la figure 2 principalement par la mise en oeuvre d'un générateur 6' qui est conçu pour générer des séquences pseudo-aléatoires de réponse (PN2) orthogonales aux séquences pseudo-aléatoires d'interrogation (PN1).

Le module récepteur (RR) du dispositif répondeur (R) se différencie du module récepteur (IR) du dispositif interrogateur (I) de la figure 2 principalement par la mise en oeuvre d'un registre 18' dans lequel est stockée le code binaire correspondant à une séquence pseudo-aléatoire d'interrogation (PN1), et par la mise en oeuvre d'un circuit 20 (connu en soi) de remise en forme des données, qui a pour fonction de restituer sous forme binaire le message reçu (trame de synchronisation et trame de données) à partir des pics de corrélation du signal 17a. Plus particulièrement, le circuit 20 effectue un codage binaire des pics de corrélation, un pic positif correspondant à un bit valant 1, et un pic négatif correspondant à un bit valant 0, et ces informations binaires sont décodées en mode différentiel, sachant qu'à l'émission on a réalisé un encodage différentiel des informations binaires (circuit encodeur 8'). Les informations binaires reconstituées par le circuit 20 sont transmises au fur et à mesure au microprocesseur de l'unité de traitement 1. Le microprocesseur est programmé pour détecter que toutes les informations binaires d'un message (trame de synchronisation et données) lui ont été transmises, et pour, une fois cette détection effectuée, transmettre ces informations binaires au générateur 7 via le signal 1c, et cadencer à l'aide du signal horloge 1b la réémission du message reçu (trame de synchronisation et trame de données).

Mesure de la distance séparant les mobile (M1) et (M2) / 1ère variante

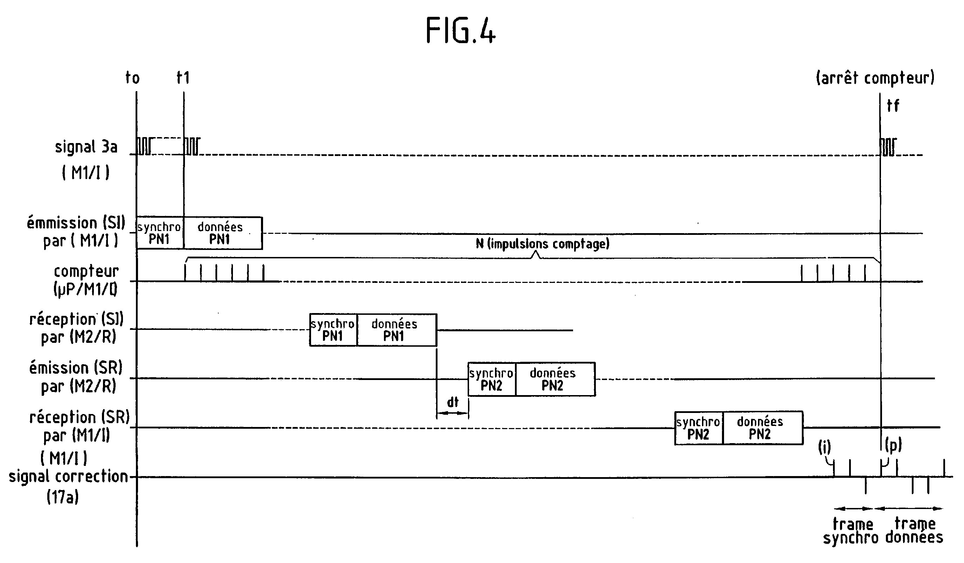

La chronologie des événements lors d'une mesure de distance entre les deux mobiles (M1) et (M2) va à présent être détaillée en référence principalement aux chronogrammes de la figure 4.

Entre deux mesures de distance le dispositif interrogateur (I) et le dispositif répondeur (R) sont constamment en mode réception (commutateurs 5 en position (b)).

Lorsque le mobile (M1) souhaite mesurer la distance qui le sépare du mobile (M2) ( figure 1), son dispositif interrogateur (I), bascule en mode émission et envoie via l'antenne (A) au dispositif répondeur (R) du mobile (M2) qui est en mode réception, un signal d'interrogation (SI) contenant un message (trame de synchronisation et trame de données) qui est délivré par le générateur 7 du module émetteur (IE) de l'interrogateur (I). Dans l'exemple particulier illustré par les chronogrammes de la figure 4, et donné à titre purement indicatif, les bits d'un message sont délivrés en série (signal 7a) par le générateur 7 du module émetteur (IE) sur front montant du signal horloge 1b. Le premier bit du message, qui correspond au premier bit de la trame de synchronisation, est délivré par le générateur 7 à l'instant (t0). Le premier bit de la trame de données est délivré à l'instant (t1). Le message qui est généré, après encodage différentiel et codage avec le code pseudo-aléatoire d'interrogation (PN1), est émis sous la forme d'un signal hyperfréquence d'interrogation (SI), par modulation en phase (modulation DPSK) avec la porteuse 3b et transposition à la fréquence F" (2,45GHz) de ladite porteuse. Le microprocesseur de l'unité de traitement 1 du module émetteur (IE) est programmé pour, parallèlement à l'envoi du message, incrémenter un compteur interne (initialement à zéro), sur chaque front montant du signal horloge 3a, à compter de l'envoi du premier bit de la trame de données (instant t1 sur le chronogramme de la figure 4). Après envoi du signal d'interrogation (SI), le dispositif interrogateur (I) du mobile (M1) bascule en mode réception (commutateur 5 en position (b)).

Le signal d'interrogation (SI) est reçu par le module récepteur (RE) du dispositif répondeur du mobile (M2), qui est en mode réception. Pendant la réception de la trame de synchronisation, l'oscillateur local 4 se verrouille en phase par rapport au signal horloge 3b , c'est-à-dire avec l'oscillateur local principal 2. Le signal reçu est démodulé (signal 15a) puis numérisé (signal 16a), et les informations binaires sont corrélées avec le code pseudo-aléatoire d'interrogation (PN1) mémorisé dans le registre 18'. Le signal de corrélation 17a en sortie du filtre de corrélation 17 comprend une succession de pics de corrélation. Le circuit 20 reconstitue, pour le microprocesseur de l'unité de traitement 1, le message binaire reçu. Après réception par le microprocesseur de ce message binaire, le dispositif répondeur bascule en mode émission (commutateur 5 en position (a)), et ce message binaire reconstitué est renvoyé par le module émetteur (RE), sous la forme du signal hyperfréquence de réponse (SR) en étant codé avec les séquences pseudo-aléatoires de réponse (PN2) délivrées par le générateur 6'. Sur les chronogrammes de la figure 4, on a représenté par (dt) le temps de transfert entre le module de réception (RR) et le module d'émission (RE) d'un dispositif répondeur (R). Après émission du signal de réponse (SR), le dispositif répondeur (R) bascule de nouveau en mode réception, et est dans l'attente du signal d'interrogation (SI) suivant. Le signal de réponse (SR) codé (PN2) qui a été renvoyé par le dispositif répondeur (R) est reçu par le module récepteur (RE) du dispositif interrogateur (I) qui est en mode réception. Le signal reçu est démodulé (signal 15a) puis numérisé (signal 16a), et les informations binaires sont corrélées avec le code pseudo-aléatoire de réponse (PN2) mémorisé dans le registre 18. Sur détection du premier pic de corrélation (p) correspondant au premier bit de la trame de données reçu, c'est-à-dire à l'instant (tf) sur la figure 4, le microprocesseur de l'unité de traitement 1 arrête son compteur interne. Cette détection est réalisée par le circuit 19, qui après détection du premier pic (p) dans le signal de corrélation 17a (figure 4), correspondant au premier bit de la trame de données, génère le signal de détection 19a pour le microprocesseur de l'unité de traitement 1 sous la forme d'un créneau ou d'une impulsion.

La valeur courante (N) du compteur du microprocesseur de l'unité de traitement 1, après arrêt, est représentative du temps de propagation des signaux d'interrogation (SI) et de réponse (SR) entre les mobiles (M1) et (M2), et par là-même de la distance séparant les deux mobiles. Le microprocesseur de l'unité de traitement 1 du dispositif interrogateur (1), après arrêt de son compteur interne, calcule automatiquement cette distance (d) selon la formule suivante:

$$d = [((N-1).th - dt).c]/2$$

Dans la formule ci-dessus, la valeur (th) correspond à la période du signal horloge 3a. La valeur de la durée de transfert (dt) des informations dans le répondeur (R) est une valeur constante qui sera estimée au cas par cas.

La mise en oeuvre d'un codage des informations des signaux d'interrogation (SI) et de réponse (SR) selon la technique connue d'étalement de spectre à séquence directe au moyen de séquences pseudo-aléatoires permet de bénéficier de tous les avantages connus de cette technique. La précision de la mesure de distance est liée à la fréquence (FH) et est d'autant plus élevée que la figure (FH) est élevée. En outre, le rapport signal sur bruit après traitement est d'autant plus important que la longueur des séquences pseudo-aléatoires (PN1) et (PN2) est importante. Il est ainsi possible de réaliser des mesures sur grande distance (supérieure au kilomètre) avec une bonne précision.

Un autre avantage prépondérant et spécifique de l'invention découle de la mise en oeuvre de séquences pseudo-aléatoires orthogonales (PN1) et (PN2). Lorsqu'un signal d'interrogation (SI) codé avec la séquence pseudo-aléatoire d'interrogation (PN1) est reçu par le mobile interrogateur en mode réception via l'antenne (A) (signal parasite qui, après émission par l'interrogateur (I), est renvoyé vers le mobile interrogateur après réflexion sur un obstacle), le signal numérique 16a qui lui correspond à l'entrée du filtre de corrélation 17 étant codé avec une séquence pseudo-aléatoire (PN1) orthogonale à la séquence pseudo-aléatoire de réponse (PN2) stockée en mémoire dans le registre 18, le filtre de corrélation 17 génère en sortie un signal de corrélation 17a exempt de pic de corrélation, et se traduisant par du bruit dont le niveau est nettement inférieur au seuil de détection utilisé par les moyens de détection de pics 19. On effectue ainsi automatiquement dans les signaux reçus par le mobile interrogateur une discrimination entre d'une part les signaux de réponse (SR) effectivement renvoyés par le mobile répondeur et qui doivent être utilisés par l'interrogateur pour la mesure de distance, et d'autre part les signaux parasites non codés avec le code de réponse (PN2), qui sont ignorés automatiquement par l'interrogateur lors de la mesure de distance.

Dans des exemples précis de réalisation donnés à titre non limitatif et non exhaustif, les séquences pseudo-aléatoires d'interrogation (PN1) et de réponse (PN2) étaient définies par les polynômes suivants:

Exemple 1 : PN1 = $(X^6 + X^5 + 1)$; PN2 = $(X^6 + X + 1)$
Exemple 2 : PN1 = $(X^6 + X + 1)$; PN2 = $(X^6 + X^5 + 1)$
Exemple 3: PN1 = $(X^9 + X^4 + 1)$; PN2 = $(X^9 + X^5 + 1)$
Exemple 4: PN1 = $(X^9 + X^5 + 1)$; PN2 = $(X^9 + X^4 + 1)$

Dans la variante qui vient d'être décrite en référence aux figures 2 à 4, le message (en particulier la trame de données) est identique au message émis par le dispositif interrogateur. Ceci n'est toutefois pas limitatif de l'invention. Dans une autre variante, le dispositif répondeur pourrait renvoyer un message (en particulier une trame de données) différent. Dans ce cas on prévoit de préférence au niveau du dispositif interrogateur un circuit de remise en forme de données faisant l'interface entre le filtre corrélateur 17 et le microprocesseur de l'unité de traitement 1. De manière avantageuse, les trames de données des messages échangés entre les deux mobiles (M1) et (M2) peuvent être utilisées pour l'échange d'informations entre mobiles telles que par exemple l'identification, la vitesse de chaque mobile, etc.

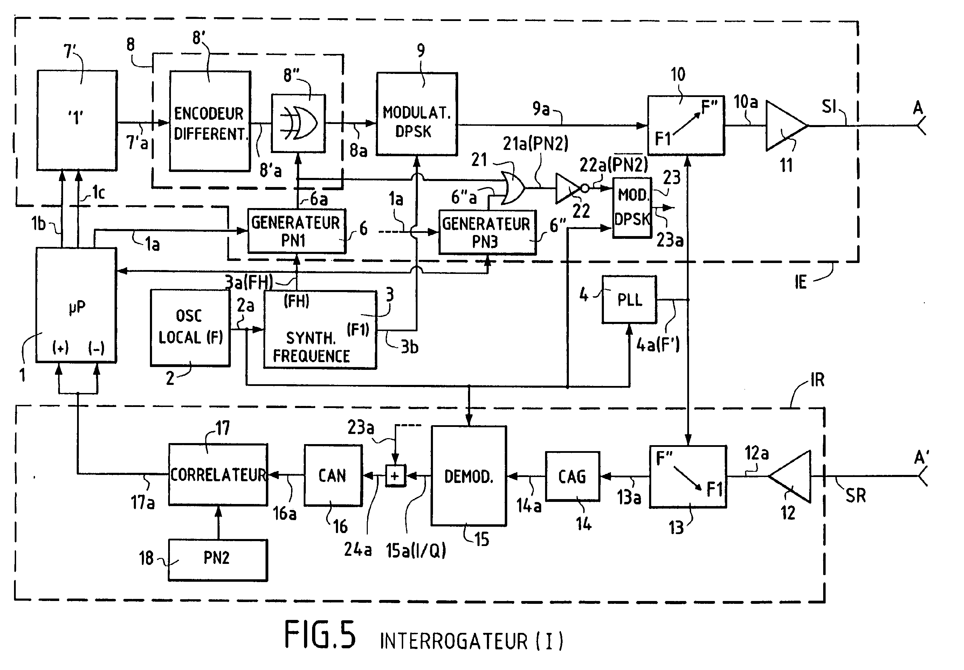

DEUXIEME VARIANTE DE REALISATION (Figures 5, 6 ET 7)

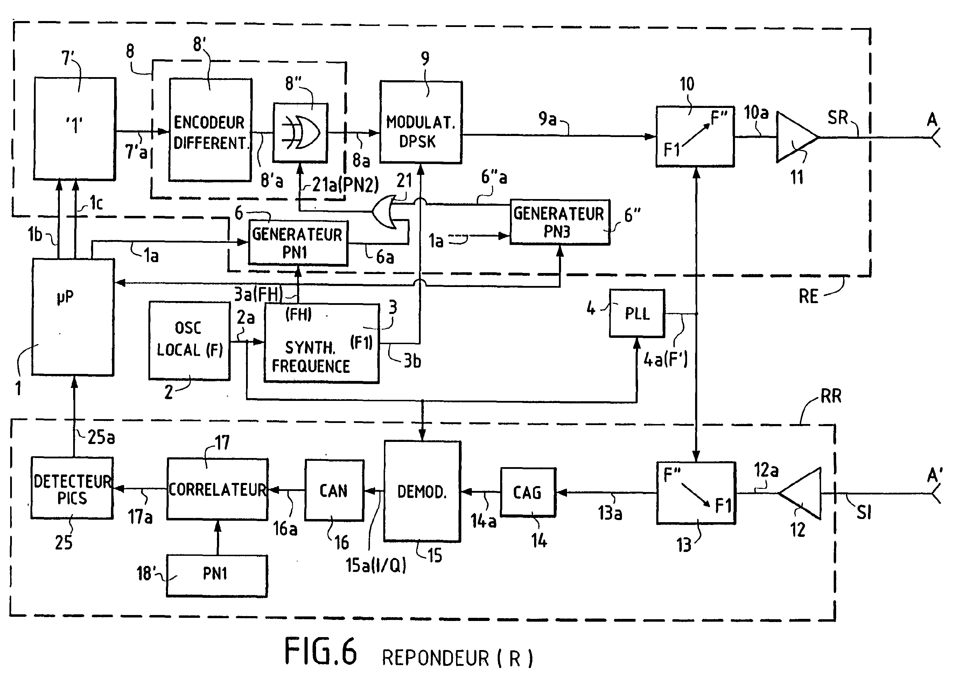

Dans la variante de réalisation des figures 5 et 6, les éléments communs avec la première variante décrite précédemment en référence aux figures 2 et 3 sont indiqués par les mêmes références et ne seront pas décrits ci-après.

En référence aux figures 5 et 6, le dispositif interrogateur (I) et le dispositif répondeur (R) comportent chacun une antenne d'émission (A) et une antenne de réception (A') qui sont distinctes l'une de l'autre (contrairement à la première variante précédemment décrite).

Le module émetteur (IE) du dispositif interrogateur (I) comporte un générateur 7' qui a pour fonction de générer en sortie ( signal 7'a) des bits à 1 en série à la cadence fixée par le signal horloge 1b. En conséquence, lorsque le signal d'autorisation 1a délivré par le microprocesseur de l'unité de traitement 1 est actif, le signal de modulation 8a en sortie des moyens d'encodage 8 correspond à la séquence pseudo-aléatoire d'interrogation (PN1) non modulée par des données contrairement à la première variante de réalisation de la figure 2.

Egalement, le module émetteur (IE) comporte un deuxième générateur 6'' de séquences pseudo-aléatoires (PN3) orthogonales aux séquences pseudo-aléatoires d'interrogation (PN1). Ce générateur 6'' est cadencé par le même signal horloge 3a que le générateur 6 (séquences PN1). Le signal numérique 6''a (séquences PN3) délivré par ce deuxième générateur 6''est additionné au signal 6a (séquences PN1) délivré par le générateur 6 ( addition logique/ porte logique 'OU' 21). Lorsque les générateurs 6 et 6'' sont activés, le signal 21a résultant de cette addition logique forme dans le temps une série de séquences pseudo-aléatoires de réponse (PN2) successives qui sont synchrones avec les séquences pseudo-aléatoires d'interrogation (PN1) délivrés par le générateur 6. Sachant qu'une séquence pseudo-aléatoire (PN3) est orthogonale à une séquence pseudo-aléatoire d'interrogation (PN1), la séquence pseudo-aléatoire de réponse (PN2) qui résulte de la somme des séquences (PN1) et (PN3) est également orthogonale à la séquence pseudo-aléatoire d'interrogation (PN1).

A titres d'exemples non limitatifs les séquences pseudo-aléatoires (PN1) et (PN3) délivrées par les générateurs 6 et 6'' pourront être générées respectivement à partir des polynômes cités précédemment pour les séquences pseudo-aléatoires (PN1) et (PN2) dans le cadre de la première variante de réalisation des figures 2 à 4.

Le signal 21a (séquences PN2) est inversé au moyen d'un inverseur logique 22, délivrant un signal 22a (séquences pseudo-aléatoires inversées /PN2). Ce signal 22a est utilisé pour moduler en phase une porteuse pure correspondant au signal horloge principal 2a. Cette modulation (moyens de modulation 23 sur la figure 5) est du même type que celle réalisée par les moyens de modulation 9, à l'aide du signal de modulation 8a, c'est-à-dire dans l'exemple illustré une modulation en phase DPSK. Le signal modulé 23a est additionné (bloc 24/ addition analogique) au signal démodulé délivré en sortie des moyens de démodulation 15 du module récepteur (IR). Cette addition se fait parallèlement sur les composantes en phase (I) et en quadrature (Q) du signal 15a. L'addition avec la composante en phase (I) est réalisée avec le signal 23a. L'addition avec la composante en quadrature (Q) est réalisée avec un signal (non représenté) obtenu par déphasage de $\pi/2$ du signal 23a. Le signal analogique 24a issu de cette addition est converti en un signal numérique 16a par le convertisseur analogique/numérique 16.

Le signal de corrélation 17a issu du filtre de corrélation 17 du module récepteur (IR) est reçu par le microprocesseur de l'unité de traitement 1 en parallèle sur deux entrées distinctes. L'une (+) de ses deux entrées est associée à un seuil de détection positif prédéterminé, et l'autre entrée (-) est associée à un seuil de détection négatif prédéterminé.

Si l'on se réfère à présent à la figure 6, on retrouve dans le dispositif répondeur (R) les mêmes générateurs 7' et 6'' ( code PN3) ainsi que les mêmes moyens de sommation logique des signaux 6''a (code PN3) et 6a (code PN1) (porte logique 'OU' 21) que pour le dispositif interrogateur (I) de la figure 5. Le signal 21a résultant de la sommation logique des signaux 6a et 6''a et correspondant aux séquences pseudo-aléatoires de réponse (PN2) est utilisé pour moduler la porteuse 3c (moyens d'encodage 8 et de modulation 9) en vue de l'émission du signal de réponse (SR). Le module récepteur (RR) du dispositif répondeur (R) de la figure 6 met en outre en oeuvre des moyens de détection 25 qui sont conçus pour détecter les pics de corrélation dans le signal de corrélation 17a, par comparaison du signal de corrélation 17a avec un seuil prédéterminé, et qui, sur détection du premier pic de corrélation dans le signal 17a génèrent pour le microprocesseur de l'unité de traitement 1 un signal de détection 19a, par exemple sous la forme d'un créneau ou d'une impulsion.

Mesure de la distance séparant les mobile (M1) et (M2) / 2ème variante

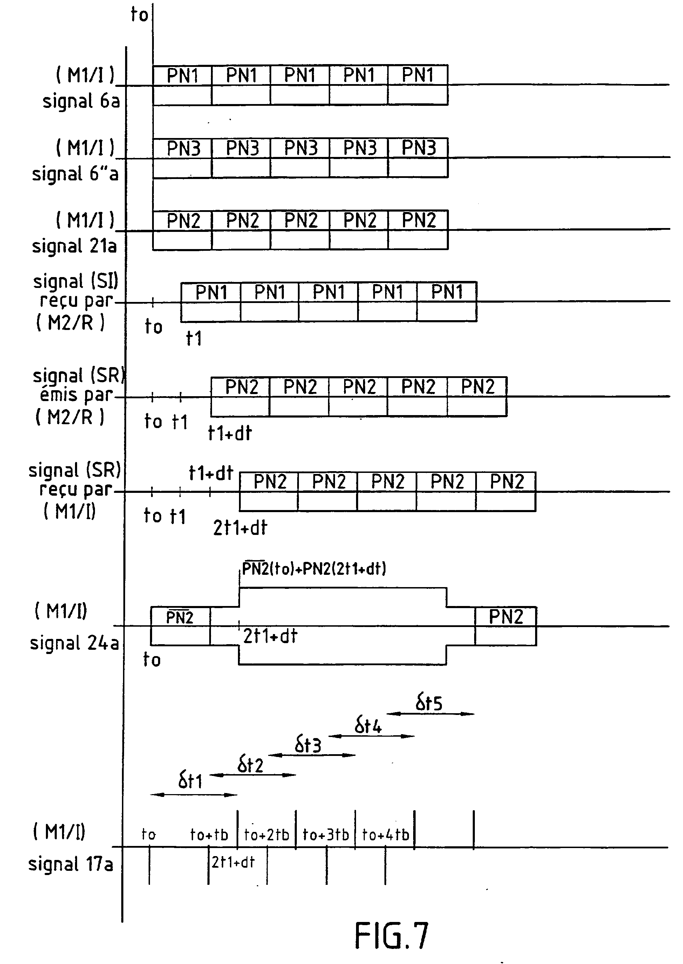

La chronologie des événements lors d'une mesure de distance entre les deux mobiles (M1) et (M2) au moyen des dispositifs interrogateur et répondeur des figures 5 et 6 va à présent être détaillée en référence principalement aux chronogrammes de la figure 7.

Pour réaliser une mesure de distance, le microprocesseur de l'unité de traitement 1 du dispositif répondeur active le signal d'autorisation 1a. Tant que ce signal d'autorisation 1a est actif, les générateur 6 et 6'' délivrent en parallèle une série de (m) séquences pseudo-aléatoires successives (PN1) et (PN3) (signaux 6a et 6''a). Dans l'exemple particulier de la figure 7, cinq séquences pseudo-aléatoires sont générées à la suite.

Le signal d'interrogation (SI) codé par la série de séquences pseudo-aléatoires d'interrogation (PN1) est émis par le dispositif interrogateur (I) du mobile (M1) puis reçu à l'instant t1 par le dispositif répondeur (R) du mobile (M2). Le dispositif répondeur (R), après détection du premier pic dans le signal de corrélation 17a ( détecteur 25) renvoie à l'instant (t1 +dt) un signal de réponse (SR) codé par une série de (m) séquences pseudo-aléatoires de réponse (PN2).

Le signal de réponse (SR) codé (PN2) est reçu par le dispositif interrogateur du mobile (M1) à l'instant (2t1 + dt). En sortie du filtre corrélateur 17, on obtient un signal de corrélation 17a constitué d'une succession de pics positifs et négatifs en alternance. Les pics positifs correspondent à la corrélation des séquences pseudo-aléatoires (PN2) reçues successivement dans le temps par le dispositif interrogateur (I) (signal de réponse SR) avec le code séquence (PN2) mémorisé dans le registre 18. Les pics négatifs correspondent à la corrélation, avec le code (PN2) mémorisé dans le registre 18, des séquences pseudo-aléatoires de réponse inversées [/PN2(t0), /PN2(t0 + tb), /PN2(t0 + 2tb), /PN2(t0 + 3tb) /PN2(t0 + 4 (tb)] qui sont successivement générées localement par le dispositif interrogateur (signal 22a) parallèlement à l'émission du signal d'interrogation (SI) codé (PN1). Sur les chronogrammes de la figure 7, tb correspond à la période du signal horloge 1b, c'est-à-dire à la durée d'une séquence pseudo-aléatoire.

Le microprocesseur de l'unité de traitement du dispositif interrogateur (I) est programmé pour effectuer en parallèle une détection des pics positifs par comparaison du signal de corrélation 17a reçu sur son entrée (+) avec un seuil (S+) positif prédéterminé, et une détection des pics négatifs par comparaison du signal de corrélation 17a reçu sur son entrée (-) avec un seuil (S-) négatif prédéterminé. Ce microprocesseur est en outre programmé pour calculer l'intervalle de temps $\delta t_i$ séparant un pic négatif et le premier pic positif suivant, et pour calculer pour chaque intervalle de temps $\delta t_i$ une distance $d_i$ selon la formule suivante :

$$d_i = (\delta t_i - dt)c/2$$

Dans l'exemple de la figure 7, le microprocesseur calculera cinq valeurs de distance ($d_1$ à $d_5$).

Chaque distance $d_i$ correspond à une estimation de la distance (D) séparant le mobile (M1) du mobile (M2). Le microprocesseur de l'unité de traitement 1 du dispositif interrogateur (I) est avantageusement programmé pour, à partir de l'ensemble des distances $d_i$, calculer une estimation de la distance (D), par exemple en effectuant une moyenne sur l'ensemble des valeurs $d_i$.

La deuxième variante qui vient d'être décrite permet avantageusement d'effectuer rapidement un calcul de distance précis entre les mobiles (M1) et (M2). Cette précision augmente avec le nombre (m) de séquences pseudo-aléatoires générées pour coder un signal d'interrogation (SI).

La deuxième variante décrite en référence aux figures 5 à 7 présente également deux avantages supplémentaires, qui découlent de la présence de pics de signes contraires dans le signal de corrélation 17a du dispositif répondeur pour caractériser d'une part les instants d'émission d'une séquence pseudo-aléatoire d'interrogation (PN1) (pics négatifs) et d'autre part les instants de réception par le dispositif interrogateur d'une séquence pseudo-aléatoire de réponse (PN2). Le premier avantage est la possibilité de mettre en oeuvre des seuils de détection (S+) et (S-) qui peuvent différer en valeur absolue, et qui de ce fait peuvent être parfaitement adaptés au niveau des pics, sachant que les pic positifs dans la variante des figures 5 à 7 présenteront une valeur maximale inférieure à celle des pics négatifs. Le deuxième avantage est que la longueur des séquences pseudo-aléatoires peut être choisie indépendamment de la portée souhaitée. En effet, dans une autre variante, on pourrait envisager de ne pas inverser le signal 21a issu de la sommation logique des séquences pseudo-aléatoires (PN1) et (PN3) ; dans ce cas seuls des pics positifs sont générés dans le signal de corrélation 17a du dispositif interrogateur (I), la mesure des intervalles de temps $\delta t_i$ étant effectuée entre deux pics positifs successifs. Or dans un telle variante, lorsque la distance entre les deux mobiles (M1) et (M2) est suffisamment importante par rapport à la longueur des séquences pseudo-aléatoire d'interrogation utilisées, pour qu'au moins deux séquences pseudo-aléatoires d'interrogation successives (PN1) soient entièrement émises (signal d'interrogation SI) par le mobile (M1) avant que la première séquence de réponse (PN2) ne soit renvoyée par le mobile (M2) ( signal de réponse SR) et reçue par le mobile (M1), l'intervalle de temps entre deux pics positifs successifs dans le signal de corrélation 17a du dispositif interrogateur (I) ne correspond plus à la distance entre mobiles. La variante décrite en référence au figures 5 à 7 permet de pallier cet inconvénient en rendant la mesure de distance totalement indépendante de la longueur des séquences pseudo-aléatoires utilisées.

L'invention n'est pas limitée aux deux variantes de réalisation qui viennent d'être décrites en référence aux figures 1 à 7, mais s'étend à tout procédé ou système de calcul de distance entre deux objets mettant en oeuvre pour coder respectivement les signaux d'interrogation (SI) et de réponse (SR), des séquences pseudo-aléatoires d'interrogation (PN1) et de réponse (PN2) qui sont orthogonales. Il convient ici de préciser que dans le cadre de l'invention la notion de séquence pseudo-aléatoire n'est pas limitée à la notion de polynômes générateurs (c'est-à-dire en pratique à la mise en oeuvre d'un registre à décalage rebouclé sur lui-même pour générer la séquence pseudo-aléatoire), mais s'étend à toute séquence (ou code) présentant les mêmes propriétés d'orthogonalité que les séquences pseudo-aléatoires générées à l'aide de polynômes, et pouvant être mise en oeuvre dans la technique de codage par étalement de spectre à séquence directe. En particulier, en guise de séquences pseudo-aléatoires d'interrogation et de réponse, il est envisageable par exemple d'utiliser des codes de Barker. Egalement, la deuxième variante de réalisation décrite en référence aux figure 5 à 7 peut être perfectionnée en sorte de permettre l'échange d'informations entre mobiles (M1) et (M2). Il suffit pour cela de modifier les dispositifs interrogateur et répondeur pour qu'ils émettent à la suite d'une série de séquences pseudo-aléatoires, un trame de données qui, de manière similaire à la premier variante de réalisation précédemment décrite, est codée par des séquences pseudo-aléatoires d'interrogation (PN1) pour le dispositif interrogateur, et par des séquences pseudo-aléatoires de réponse (PN2) pour le dispositif répondeur ; dans ce cas au niveau des dispositifs interrogateur et répondeur on prévoit un circuit de remise en forme des données faisant l'interface avec le microprocesseur de l'unité de traitement 1.

## Revendications

1. Procédé de mesure de la distance séparant un objet interrogateur (M1/I) et un objet répondeur (M2/R), selon lequel on fait émettre par l'objet interrogateur un signal d'interrogation (SI) à destination de l'objet répondeur et on fait émettre par l'objet répondeur, après réception de ce signal d'interrogation, un signal de réponse (SR) à destination de l'objet interrogateur, et on calcule la distance entre l'objet interrogateur et l'objet répondeur à partir d'une mesure du temps de propagation des signaux d'interrogation (SI) et de réponse (SR) entre les deux objets, le signal d'interrogation (SI) étant obtenu en modulant une onde porteuse avec un premier signal de modulation (8a), et le signal de réponse (SR) étant obtenu en modulant une onde porteuse avec un deuxième signal de modulation (8a), **caractérisé en ce que**

    - ledit premier signal de modulation (8a) est produit au moyen d'une ou plusieurs séquences pseudo-aléatoires d'interrogation (PN1),
    - ledit deuxième signal de modulation (8a) est produit au moyen d'une ou plusieurs séquences pseudo-aléatoires de réponse (PN2) qui sont orthogonales aux séquences pseudo-aléatoires d'interrogation (PN1),
    - pour la mesure de distance, on effectue une corrélation du signal reçu par l'objet interrogateur (M1/I) avec le code caractéristique d'une séquence pseudo- aléatoire de réponse (PN2).

2. Procédé selon la revendication 1 **caractérisé en ce que** le premier signal de modulation (8a) [objet interrogateur (M1/I)] est généré en encodant une première trame de données binaires selon la technique d'étalement de spectre à séquence directe (DS-SS), et au moyen de séquences pseudo-aléatoires d'interrogation (PN1), **en ce que** le deuxième signal de modulation (8a) [objet répondeur (M2/R)] est généré en encodant une seconde trame de donnée binaires, selon la technique d'étalement de spectre à séquence directe (DS-SS) et au moyen de séquences pseudo-aléatoires de réponse (PN2), et **en ce que** la mesure du temps de propagation des signaux entre les deux objets, pour le calcul de la distance, est réalisée en détectant un pic de corrélation (p) dans le signal de corrélation (17a) issu de la corrélation du signal reçu par l'objet interrogateur avec le code caractéristique de la séquence pseudo-aléatoire de réponse (PN2).

3. Procédé selon la revendication 1 **caractérisé en ce que** :

    - au niveau de l'objet interrogateur (M1/I), on génère une série de (m) séquences pseudo-aléatoires d'interrogation (PN1) [m étant un entier supérieur ou égal à 1] pour coder le signal d'interrogation (SI), et
    - au niveau de l'objet répondeur (M2/R), on génère une série de (m) séquences pseudo-aléatoires de réponse (PN2) pour coder le signal de réponse (SR).

4. Procédé selon la revendication 3 **caractérisé en ce qu'**au niveau de l'objet interrogateur (M1/I), parallèlement à l'envoi du signal d'interrogation (SI), on génère, en synchronisme avec la série de (m) séquences pseudo-aléatoires d'interrogation (PN1), une série de (m) séquences pseudo-aléatoires (/PN2) inversées par rapport aux séquences pseudo-aléatoires de réponse (PN2), et **en ce que** la mesure du temps de propagation des signaux entre les deux objets, pour le calcul de la distance, est réalisée :

    - en générant, à partir du signal de réponse (SR) reçu par l'objet interrogateur (M1/I) et de la série de (m) séquences pseudo-aléatoires de réponse inversées (/PN2), un signal de corrélation (17a) comportant des pics de corrélation négatifs et positifs, chaque pic négatif étant issu de la corrélation d'une séquence pseudo-aléatoire de réponse inversée avec le code caractéristique de la séquence pseudo-aléatoire d'interrogation (PN2), et chaque pic positif étant issu de la corrélation d'une séquence pseudo-aléatoire du signal de réponse (SR) reçu par l'objet interrogateur (M1/I) avec le code caractéristique de la séquence pseudo-aléatoire d'interrogation (PN2),
    - et en mesurant chaque intervalle de temps ($\delta t_i$) séparant un pic négatif et le premier pic positif qui le suit dans le temps.

5. Système de mesure de la distance entre un objet interrogateur (M1/I) et un objet répondeur (M2/R) dans lequel chaque objet est équipé d'une part d'un module émetteur comportant des moyens de modulation d'une porteuse et permettant l'émission d'un signal à destination de l'autre objet, et d'autre part d'un module récepteur apte à recevoir un signal émis par le module émetteur de l'autre objet, **caractérisé en ce que** :

> - le module émetteur (IE) de l'objet interrogateur (M1/I) comporte un générateur (6) de séquences pseudo-aléatoires d'interrogation (PN1) et les moyens de modulation (9) de ce module émetteur sont conçus pour moduler une onde porteuse (3<u>b</u>) à partir des séquences pseudo-aléatoires d'interrogation (PN1) délivrées par ce générateur (6),
> - le module émetteur (RE) de l'objet répondeur (M2/R) comporte un générateur de séquences pseudo-aléatoires de réponse (PN2) qui sont orthogonales au séquences pseudo-aléatoires d'interrogation (PN1) et les moyens de modulation (9) de ce module émetteur sont conçus pour moduler une onde porteuse (3<u>b</u>) à partir des séquences pseudo-aléatoires de réponse (PN2) délivrées par ce générateur,
> - le module récepteur (RR) de l'objet répondeur (M2/R) comporte un registre (18') dans lequel est mémorisé le code caractéristique d'une séquence pseudo-aléatoire d'interrogation (PN1) et des moyens de corrélation (17) du signal reçu par l'objet répondeur (M2/R) avec le code (PN1) stocké dans ce registre (18'),
> - le module récepteur (IR) de l'objet interrogateur (M1/I) comporte un registre (18) dans lequel est mémorisé le code caractéristique d'une séquence pseudo-aléatoire de réponse (PN2), et des moyens de corrélation (17) du signal reçu par l'objet interrogateur (M1/I) avec le code (PN2) stocké dans ce registre (18),
> - l'objet interrogateur (M1/I) comporte des moyens (1) de calcul de la distance séparant les deux objets interrogateurs (M1/I) et répondeur (M2/R) à partir d'une détection de pics de corrélation dans le signal de corrélation (17<u>a</u>) issu des moyens de corrélation (17).

**6.** Système selon la revendication 5 **caractérisé en ce que** les moyens (1) de calcul de distance de l'objet interrogateur (M1/I) mettent en oeuvre un compteur qui est déclenché lors de l'émission du signal d'interrogation (SI) et qui est arrêté sur détection d'un pic de corrélation (p) dans le signal de corrélation (17<u>a</u>).

**7.** Système selon la revendication 5 **caractérisé en ce que** le module émetteur (IE) du dispositif interrogateur (M1/I) comporte des moyens (6", 21, 22) conçus pour générer des séquences pseudo-aléatoires (/PN2) inversées par rapport aux séquences pseudo-aléatoires de réponse (PN2), et synchrones avec les séquences pseudo-aléatoires d'interrogation (PN1) générées par le générateur (6), **en ce que** les moyens de corrélation (17) du module émetteur (IE) du dispositif interrogateur (M1/I) sont également conçus pour réaliser une corrélation, avec le code de réponse (PN2) stocké dans le registre (18), de chaque séquence pseudo-aléatoire inversée (/PN2) générée localement, et **en ce que** les moyens (1) de calcul de distance sont conçus pour effectuer une détection des pics positifs et des pics négatifs dans le signal de corrélation (17<u>a</u>) délivré par les moyens de corrélation (17) du module récepteur (IR) de l'objet interrogateur (M1/I).

**8.** Application du procédé de l'une des revendications 1 à 4 à la mesure de distance entre véhicules (M1, M2) se suivant sur un trajet, et plus particulièrement entre rames ferroviaires, chaque véhicule (M1 , M2) étant équipé à l'avant d'un dispositif interrogateur (I) et à l'arrière d'un dispositif répondeur (R), le dispositif interrogateur (I) d'un véhicule (M1) étant prévu pour communiquer avec le dispositif répondeur (R) du véhicule (M2) qui le précède, et pour permettre un calcul de distance conformément à l'une des revendications 1 à 4.

## Claims

**1.** A method for measuring the distance between an interrogator object (M1/I) and a responder object (M2/R) according to which the interrogator object is caused to transmit an interrogation signal (SI) to the responder object and the responder object after receiving this interrogation signal is caused to transmit a response signal (SR) to the interrogator object, and the distance between the interrogator object and the responder object is computed from a measurement of the propagation time of the interrogation (SI) and response (SR) signals between both objects, the interrogation signal (SI) being obtained by modulating a carrier wave with a first modulation signal (8a), and the response signal (SR) being obtained by modulating a carrier wave with a second modulation signal (8a), **characterized in that**

> - said first modulation signal (8a) is produced by means of one or more pseudo-random interrogation sequences (PN1),
> - said second modulation signal (8a) is produced by means or one or more pseudo-random response sequences (PN2) which are orthogonal to the pseudo-random interrogation sequences (PN1),
> - for the distance measurement, a correlation of the received signal by the interrogator object (M1/I) is correlated with the characteristic code of a pseudo-random response sequence (PN2).

2. The method according to claim 1, **characterized in that** the first modulation signal (8a) [interrogator object (M1/I)] is generated by coding a first frame of binary data according to the direct sequence spectrum spreading technique (DS-SS), and by means of pseudo-random interrogation sequences (PN1), **in that** the second modulation signal (8a) [responder object (M2/R)] is generated by coding a second frame of binary data, according to a direct sequence spectrum spreading technique (DS-SS) and by means of pseudo-random response sequences (PN2), and **in that** the measurement of the propagation time of the signals between both objects, for calculating the distance, is achieved by detecting a correlation peak (p) in the correlation signal (17a) from the correlation of the received signal by the interrogator object with the characteristic code of the pseudo-random response sequence (PN2).

3. The method according to claim 1, **characterized in that**:

   - at the interrogator object (M1/I), a series of (m) pseudo-random interrogation sequences (PN1) [m being an integer larger than or equal to 1] is generated for coding the interrogation signal (SI), and
   - at the responder object (M2/R), a series of (m) pseudo-random response sequences (PN2) is generated for coding the response signal (SR).

4. The method according to claim 3, **characterized in that** at the interrogator object (M1/I), in parallel with the sending of the interrogation signal (SI), a series of (m) pseudo-random sequences (/PN2) inverted with respect to the pseudo-random response sequences (PN2) is generated in synchronism with the series of (m) pseudo-random interrogation sequences (PN1), and **in that** the measurement of the propagation time of the signals between both objects, for calculating the distance, is achieved:

   - by generating, from the response signal (SR) received by the interrogator object (M1/I) and from the series of (m) pseudo-random inverted response sequences (/PN2), a correlation signal (17a) including negative and positive correlation peaks, each negative peak resulting from the correlation of an inverted pseudo-random response sequence with the characteristic code of the pseudo-random interrogation sequence (pN2), and each positive peak resulting from the correlation of a pseudo-random sequence of the response signal (SR) received by the interrogator object (M1/I) with the characteristic code of the pseudo-random interrogation sequence (PN2),
   - and by measuring each time interval ($\delta t_i$) separating a negative peak from the first positive peak which follows in time.

5. A system for measuring the distance between an interrogator object (M1/I) and a responder object (M2/R) wherein each object is equipped with a transmitter module including means for modulating a carrier and providing transmission of a signal to the other object, on the one hand, and with a receiver module capable of receiving a signal transmitted by the transmitter module of the other object on the other hand, **characterized in that**:

   - the transmitter module (IE) of the interrogator object (M1/I) includes a generator (6) of pseudo-random interrogation sequences (PN1) and modulation means (9) of this transmitter module are designed to modulate a carrier (3b) from pseudo-random interrogation sequences (PN1) delivered by this generator (6),
   - the transmitter module (RE) of the responder object (M2/R) includes a generator of pseudo-random response sequences (PN2) which are orthogonal to the pseudo-random interrogation sequences (PN1) and the modulation means (9) of this transmitter module are designed to modulate a carrier wave (3b) from the pseudo-random response sequences (PN2) delivered by this generator,
   - the receiver module (RR) of the responder object (M2/R) includes a register (18') wherein the characteristic code of a pseudo-random interrogation sequence (PN1) and means (17) for correlating the signal received by the responder object (M2/R) with the code (PN1) stored in this register (18') are stored in memory,
   - the receiver module (IR) of the interrogator object (M1/I) includes a register (18) wherein the characteristic code of a pseudo-random response sequence (PN2) and means (17) for correlating the signal received by the interrogator object (M1/I) with the code (PN2) stored in this register (18), are stored in memory,
   - the interrogator object (M1/I) includes means (1) for calculating the distance separating both interrogator (M1/I) and responder (M2/R) objects, from the detection of correlation peaks in the correlation signal (17a) outputted by the correlation means (17).

6. The system according to claim 5, **characterized in that** the means (1) for calculating the distance of the interrogator object (M1/I) apply a counter which is triggered when the interrogation signal (SI) is transmitted and which is stopped upon detection of a correlation peak (p) in the correlation signal (17a).

7. The system according to claim 5, **characterized in that** the transmitter module (IE) of the interrogator device (M1/I) includes means (6", 21, 22) designed for generating pseudo-random sequences (/PN2) inverted with respect to the pseudo-random response sequences (PN2), and synchronous with the pseudo-random interrogation sequences (PN1) generated by the generator (6), **in that** the correlation means (17) of the transmitter module (IE) of the interrogator device (M1/I) are also designed for producing a correlation, with the response code (PN2) stored in the register (18), of each inverted pseudo-random sequence (/PN2) generated locally, and **in that** the distance calculating means (1) are designed for performing a detection of the positive peaks and the negative peaks in the correlation signal (17a) delivered by the correlation means (17) of the receiver module (IR) of the interrogator object (M1/I).

8. The application of the method according to any of claims 1 to 4 to measuring distance between vehicles (M1, M2) which follow each other along a path, and more particularly between railway trains, each vehicle (M1, M2) being equipped at the front with an interrogator device (I) and at the rear with a responder device (R), the interrogator device (I) of a vehicle (M1) being provided for communicating with the responder device (R) of the vehicle (M2) which precedes it, and for allowing a distance calculation in accordance with any of claims 1 to 4.

**Patentansprüche**

1. Verfahren zum Messen der Entfernung zwischen einem abfragenden Objekt (M1/I) und einem antwortenden Objekt (M2/R), wonach durch das abfragende Objekt ein Abfragesignal (SI) zu dem antwortenden Objekt ausgesandt wird und durch das antwortende Objekt - nach dem Empfang dieses Abfragesignals - ein Antwortsignal (SR) zu dem abfragenden Objekt ausgesandt wird, und die Entfernung zwischen dem abfragenden Objekt und dem antwortenden Objekt anhand einer Messung der Ausbreitungszeit des Abfragesignals (SI) und des Antwortsignals (SR) zwischen den zwei Objekten berechnet wird, wobei das Abfragesignal (SI) **dadurch** erhalten wird, daß eine Trägerwelle mit einem ersten Modulationssignal (8a) moduliert wird, und das Antwortsignal (SR) **dadurch** erhalten wird, daß eine Trägerwelle mit einem zweiten Modulationssignal (8a) moduliert wird, **dadurch gekennzeichnet, daß**:

- das genannte erste Modulationssignal (8a) mittels einer oder mehrerer pseudozufälliger Abfragefolgen (PN1) erzeugt wird,
- das genannte zweite Modulationssignal (8a) mittels einer oder mehrerer pseudozufälliger Antwortfolgen (PN2) erzeugt wird, die zu den pseudozufälligen Abfragefolgen (PN1) orthogonal sind,
- für die Entfernungsmessung eine Korrelation des durch das abfragende Objekt (M1/I) empfangenen Signals mit dem für eine pseudozufällige Antwortfolge (PN2) charakteristischen Code durchgeführt wird.

2. Verfahren nach Anspruch 1, **dadurch gekennzeichnet, daß** das erste Modulationssignal (8a) [abfragendes Objekt (M1/I)] **dadurch** erzeugt wird, daß ein erster Block von Binärdaten nach der Direct Sequence Spread Spectrum (DSSS)-Technik oder mittels pseudozufälliger Abfragefolgen (PN1) codiert wird, daß das zweite Modulationssignal (8a) [antwortendes Objekt (M2/R)] **dadurch** erzeugt wird, daß ein zweiter Block von Binärdaten nach der Direct Sequence Spread Spectrum (DSSS)-Technik oder mittels pseudozufälliger Antwortfolgen (PN2) codiert wird, und daß die Messung der Ausbreitungszeit der Signale zwischen den zwei Objekten - für die Berechnung der Entfernung - **dadurch** vollzogen wird, daß ein Korrelationspeak (p) in dem Korrelationssignal (17a) erfaßt wird, das aus der Korrelation des durch das abfragende Objekt empfangenen Signals mit dem für die pseudozufällige Antwortfolge (PN2) charakteristischen Code hervorgegangen ist.

3. Verfahren nach Anspruch 1, **dadurch gekennzeichnet, daß**:

- im Bereich des abfragenden Objekts (M1/I) eine Reihe von (m) pseudozufälligen Abfragefolgen (PN1) erzeugt wird [wobei m eine Ganzzahl größer oder gleich 1 ist], um das Abfragesignal (SI) zu codieren, und
- im Bereich des antwortenden Objekts (M2/R) eine Reihe von (m) pseudozufälligen Antwortfolgen (PN2) erzeugt wird, um das Antwortsignal (SR) zu codieren.

4. Verfahren nach Anspruch 3, **dadurch gekennzeichnet, daß** im Bereich des abfragenden Objekts (M1/I), parallel zur Sendung des Abfragesignals (SI), synchron mit der Reihe von (m) pseudozufälligen Abfragefolgen (PN1), eine Reihe von (m) pseudozufälligen Folgen (/PN2) generiert wird, die im Vergleich zu den pseudozufälligen Antwortfolgen (PN2) umgekehrt sind, und daß die Messung der Ausbreitungszeit der Signale zwischen den zwei Objekten, für die Berechnung der Entfernung, **dadurch** vollzogen wird, daß:

- anhand des durch das abfragende Objekt (M1/I) empfangenen Antwortsignals (SR) und der Reihe von (m) umgekehrten pseudozufälligen Antwortfolgen (/PN2) ein Korrelationssignal (17a) mit negativen und positiven Korrelationspeaks erzeugt wird, wobei jedes negative Peak aus der Korrelation einer umgekehrten pseudozufälligen Antwortfolge mit dem für die pseudozufällige Abfragfolge (PN2) charakteristischen Code hervorgegangen ist und wobei jedes positive Peak aus der Korrelation einer pseudozufälligen Folge des durch das abfragende Objekt (M1/K) empfangenen Antwortsignals (SR) mit dem für die pseudozufällige Abfragefolge (PN2) charakteristischen Code hervorgegangen ist, - und **dadurch**, daß jeder Zeitabstand (δti) gemessen wird, welcher ein negatives Peak und das auf dieses zeitlich folgende erste positive Peak voneinander trennt.

5. System zum Messen der Entfernung zwischen einem abfragenden Objekt (M1/I) und einem antwortenden Objekt (M2/R), bei dem jedes Objekt einerseits mit einem Sendemodul, das Mittel zur Modulation einer Trägerwelle umfaßt und das das Senden eines Signals an das andere Objekt ermöglicht, und andererseits mit einem Empfängermodul ausgestattet ist, das geeignet ist, ein durch das Sendemodul des anderen Objekts gesendetes Signal zu empfangen, **dadurch gekennzeichnet, daß**:

- das Sendemodul (IE) des abfragenden Objekts (M1/I) einen Generator (6) für pseudozufällige Abfragefolgen (PN1) umfaßt und die Modulationsmittel (9) dieses Sendemoduls ausgelegt sind, um eine Trägerwelle (3b) anhand der durch diesen Generator (6) gelieferten pseudozufälligen Abfragefolgen (PN1) zu modulieren,
- das Sendemodul (RE) des antwortenden Objekts (M2/R) einen Generator für pseudozufällige Antwortfolgen (PN2) umfaßt, die zu den pseudozufälligen Abfragefolgen (PN1) orthogonal sind, und die Modulationsmittel (9) dieses Sendemoduls ausgelegt sind, um eine Trägerwelle (3b) anhand der durch diesen Generator gelieferten pseudozufälligen Antwortsequenzen (PN2) zu modulieren,
- das Empfängermodul (RR) des antwortenden Objekts (M2/R) ein Register (18'), in dem der für eine pseudozufällige Abfragefolge (PN1) charakteristische Code gespeichert ist, sowie Mittel (17) zur Korrelation des durch das antwortende Objekt (M2/R) empfangenen Signals mit dem in diesem Register (18') gespeicherten Code (PN1) umfaßt,
- das Empfängermodul (IR) des abfragenden Objekts (M1/I) ein Register (18), in dem der für eine pseudozufällige Antwortfolge (PN2) charakteristische Code gespeichert ist, sowie Mittel (17) zur Korrelation des durch das abfragende Objekt (M1/I) empfangenen Signals mit dem in diesem Register (18) gespeicherten Code (PN2) umfaßt,
- das abfragende Objekt (M1/I) Mittel (1) zur Berechnung der Entfernung zwischen dem abfragenden Objekt (M1/I) und dem antwortenden Objekt (M2/R) anhand einer Erfassung von Korrelationspeaks in dem aus den Korrelationsmitteln (17) hervorgegangenen Korrelationssignal (17a) umfaßt.

6. System nach Anspruch 5, **dadurch gekennzeichnet, daß** die Entfernungsberechnungsmittel (1) des abfragenden Objekts (M1/I) einen Zähler verwenden, der bei Senden des Abfragesignals (SI) ausgelöst wird und der bei Erfassung eines Korrelationspeaks (p) in dem Korrelationssignal (17a) angehalten wird.

7. System nach Anspruch 5, **dadurch gekennzeichnet, daß** das Sendemodul (IE) der Abfragevorrichtung (M1/I) Mittel (6", 21, 22) umfaßt, die ausgelegt sind, um pseudozufällige Folgen (/PN2) zu erzeugen, die im Vergleich zu den pseudozufälligen Antwortfolgen (PN2) umgekehrt und mit den durch den Generator (6) erzeugten pseudozufälligen Abfragefolgen (PN1) synchron sind, daß die Korrelationsmittel (17) des Sendemoduls (IE) der Abfragevorrichtung (M1/I) ebenfalls ausgelegt sind, um eine Korrelation einer jeden lokal generierten, umgekehrten pseudozufälligen Folge (/PN2) mit dem in dem Register (18) gespeicherten Antwortcode (PN2) durchzuführen, und daß die Mittel (1) zur Entfernungsberechnung ausgelegt sind, um eine Erfassung der positiven Peaks und der negativen Peaks in dem durch die Korrelationsmittel (17) des Empfängermoduls (IR) des abfragenden Objekts (M1/I) gelieferten Korrelationssignal (17a) durchzuführen.

8. Anwendung des Verfahrens von einem der Ansprüche 1 bis 4 auf die Messung der Entfernung zwischen sich auf einer Strecke folgenden Fahrzeugen (M1. M2) und insbesondere zwischen Eisenbahnwagenzügen, wobei jedes Fahrzeug (M1, M2) vorne mit einer Abfragevorrichtung (I) und hinten mit einer Antwortvorrichtung (R) ausgestattet ist, wobei die Abfragevorrichtung (I) eines Fahrzeugs (M1) vorgesehen ist, um mit der Antwortvorrichtung (R) des vor ihm fahrenden Fahrzeugs (M2) zu kommunizieren und um eine Entfernungsberechnung nach einem der Ansprüche 1 bis 4 zu ermöglichen.

FIG.1

FIG.2 INTERROGATEUR (I)

FIG.3 REPONDEUR ( R )

# FIG.4

EP 1 055 940 B1

FIG.5 INTERROGATEUR (I)

FIG.6 REPONDEUR ( R )

FIG.7